# FASCICULE DE BREVET EUROPEEN

(11) **EP 0 717 946 B1**
(45) Date de publication et mention de la délivrance du brevet: **07.06.2000**
(21) Numéro de dépôt: 95402722.3
(22) Date de dépôt: 01.12.1995
(51) Int. Cl.: A47B 39/02, A47J 39/00, A47B 31/02

(54) **Procédé de remise en température de plats cuisinés à l'avance, chariot de transport et de remise en température, et plateau pour plats cuisinés, et plateau pour plats cuisinés à l'avance**
Verfahren zum Erwärmen von zuvor zubereiteten Fertiggerichten, Transport- und Aufwärmewagen und Tablett für Fertiggerichte sowie Tablett für zuvor zubereitete Fertiggerichte
Method for reheating previously prepared convenience food, transport and reheating cart, and tray for convenience food as well as tray for previously prepared convenience food

(30) Priorité: 07.12.1994 FR 9414696; 24.05.1995 FR 9506184
(43) Date de publication de la demande: 26.06.1996
(73) Titulaire: CIDELCEM INDUSTRIES, 77185 Lognes (FR)
(72) Inventeur: Ayot, Gilles, F-10130 Chamoy (FR); Goujon, Jean-Marc, F-51200 Epernay (FR); Meyer, Jean-Christophe, F-10120 Saint Andre les Vergers (FR)
(74) Mandataire: Boutin, Antoine

(56) Documents cités:
- EP-A- 0 072 336
- DE-A- 2 711 088
- FR-A- 2 420 947
- FR-A- 2 647 660
- US-A- 3 275 393
- US-A- 5 003 159

## Description

L'invention est relative à un procédé de remise en température de plats cuisinés réfrigérés, à un chariot de transport et de remise en température de plats cuisinés réfrigérés, ainsi qu'à un plateau de réception de plats cuisinés réfrigérés.

On sait que dans les collectivités et en particulier dans les hôpitaux, la préparation des repas présente des contraintes particulières, car la distribution simultanée de plats chauds à température désirée et de plats frais dans des bonnes conditions micro-biologiques est impossible à effectuer. Depuis plusieurs années, on résout le problème de l'alimentation d'une collectivité importante dans de bonnes conditions selon une technique dite de "liaison froide".

Dans cette technique connue, on prépare, on cuit ou on cuisine des aliments dans une unité de production ou une cuisine centrale ; on refroidit les aliments cuisinés par un passage en cellule de réfrigération rapide, dans lequel les aliments cuisinés passent d'un état chaud correspondant à une température comprise entre 65 et 72° C à un état froid égal ou inférieur à 3° C ; on entrepose les aliments cuisinés refroidis dans une chambre froide à une température conforme à la norme en vigueur et inférieure à 3° C pendant une durée de stockage variable comprise entre 1 et 21 jours ; on répartit les aliments cuisinés selon des plats individuels en les mettant dans des récipients du genre barquette, assiette, ou autre conteneur ; on charge les plats individuels d'aliments cuisinés dans un chariot de transport réfrigéré ; on effectue à l'aide du chariot de transport réfrigéré le transport des plats individuels réfrigérés vers un lieu de consommation ; on remet en température séparément certains desdits plats cuisinés pour leur faire atteindre une température comprise entre 65 et 72° C ; et l'on place ensuite le plat remis en température sur un plateau avec les plats froids, et l'on sert au consommateur individuel un repas comportant ainsi sur le même plateau des plats cuisinés réfrigérés et des plats cuisinés remis en température.

De manière analogue, on utilise également une technique dite de "liaison surgelée", comportant un cycle d'étapes analogues à celles décrites ci-dessus pour la technique dite de "liaison froide" : la différence essentielle entre les deux techniques est que la température de réfrigération et de stockage est d'à peu près 3°C dans le cas d'une "liaison froide", tandis que la température de surgélation et d'entreposage est inférieure à - 18°C dans le cas de la "liaison surgelée", ce qui permet d'entreposer les aliments surgelés pendant une durée d'entreposage nettement supérieure qui est de l'ordre d% plusieurs mois.

Pour développer les techniques dites de "liaison froide" ou "liaison surgelée", il est connu d'utiliser des chariots de transport réfrigérés.

Ces chariots comportent habituellement deux compartiments ou enceintes isolées l'un de l'autre, plus précisément une première enceinte dans laquelle sont disposés sur des supports latéraux les plateaux avec les plats ne nécessitant pas une remise en température comme les hors-d'oeuvres et les desserts, et une deuxième enceinte pourvue d'un empilage de plaques chauffantes électriques sur lesquelles sont disposées des barquettes contenant les plats nécessitant une remise en température.

Chacune de ces deux enceintes est associée à des moyens de refroidissement comme par exemple un évaporateur ventilé, et à des moyens d'accumulation de froid comme par exemple un bloc contenant un liquide eutectique. Ces moyens d'accumulation de froid peuvent être communs pour les deux enceintes.

Ces chariots permettent ainsi la mise en oeuvre d'un procédé comprenant la réfrigération, le stockage, le transport, le réchauffage des plats devant être remis en température, et finalement la distribution des plateaux aux consommateurs, après avoir déposé le plat chaud sur le plateau correspondant.

L'inconvénient de ce procédé est que le plat chaud doit être retiré de la plaque chauffante correspondante afin d'être, après sa mise en température, placé sur le plateau juste avant de remettre celui-ci au consommateur.

Ce procédé demande ainsi un travail supplémentaire du personnel de service qui est chargé de la distribution aux consommateurs.

Cette manutention des plats chauds comportent en outre des risques d'accidents pouvant provoquer des brûlures et des méprises dans l'association d'un plat chaud avec les plats froids se trouvant sur un plateau. Dans le cadre d'un hôpital, cela peut avoir des conséquences néfastes pour le patient concerné.

D'autres chariots sont connus du US-3 275 393 et du US 5 003 159. Dans le premier document, il s'agit d'un chariot à deux compartiments, l'un représentant une zone chaude et l'autre une zone froide, avec entre eux une barrière thermique. Dans le chariot selon le deuxième document, l'on utilise pour la remise en température des assiettes spéciales dans lesquelles sont intégrés des résistances électriques.

Encore une autre installation pour le refroidissement et le chauffage de plats cuisinés est connue du DE 27 11 088. L'installation comprend une station fixe sous forme d'une chambre réfrigérée et un chariot de transport dans lequel sont placés des plateaux portant des plats cuisinés. Le chariot peut entrer dans la chambre qui est pourvue d'une pile de plaques dans lesquelles sont noyées des bobines d'inductance. Les plats devant être chauffés sont contenus dans des récipients métalliques qui doivent être alignés sur les bobines d'inductance pour la remise en température des plats.

L'invention a pour but de proposer un procédé destiné à permettre l'ensemble de la préparation des plateaux individuels déjà dans l'unité de production telle qu'une cuisine centrale, ce qui facilite la manutention ultérieure des plats immédiatement avant leur distribution aux consommateurs et qui supprime le risque d'accident ou de méprise dans la mise en oeuvre d'un procédé de ce genre.

L'invention a également pour but de proposer un chariot pour la mise en oeuvre du procédé selon l'invention et qui permet en outre une utilisation optimale de l'espace à l'intérieur de l'enceinte.

Un autre but de l'invention est de proposer un plateau adapté au chariot et à la mise en oeuvre du procédé selon l'invention.

L'invention a pour objet un procédé de remise en température de plats cuisinés à l'avance chargés dans une enceinte unique réfrigérée d'un chariot de transport en vue de leur transport vers un lieu de consommation, procédé dans lequel on remet en température certains desdits plats cuisinés, en vue de leur consommation, et dans lequel lesdits certains plats cuisinés devant être remis en température sont, avant d'être chargés dans l'enceinte, disposés avec les plats ne nécessitant pas une remise en température, sur un même plateau commun à tous les plats constituant un repas individuel, chaque plateau étant, avant d'être disposé dans l'enceinte unique, pourvu d'un élément en forme de cloche disposée sur une première partie de plateau recevant un plat cuisiné destiné à être remis en température, de manière à délimiter avec ladite première partie de plateau une cavité fermée de remise en température, ladite enceinte unique étant continuellement réfrigérée pendant la remise en température desdits certains plats cuisinés de manière à maintenir une température de réfrigération convenable des plats cuisinés non remis en température, caractérisé en ce qu'on utilise pour la remise en température un empilage de plaques chauffantes disposées à l'intérieur de ladite enceinte unique dudit chariot de transport réfrigéré, en ce que chaque première partie de plateau est agencée pour constituer une zone thermiquement conductrice, en ce qu'on dispose la première partie de plateau directement sur la plaque chauffante correspondante qui présente une aire correspondant sensiblement à celle de la première partie de plateau, et en ce qu'on effectue la remise en température par transfert thermique à travers ladite première partie de plateau.

Selon une autre caractéristique de ce procédé:
- l'on isole thermiquement chaque plaque chauffante vers le bas est vers les côtés.

L'invention a également pour objet un chariot de transport réfrigéré de plats cuisinés à l'avance, du type comportant des moyens de réfrigération ou d'accumulation de froid et des moyens de chauffage ou de remise et de maintien en température, l'ensemble desdits moyens étant contenu dans une même enceinte unique, caractérisé en ce que ledit chariot comporte d'un seul côté de l'enceinte un empilage de plaques chauffantes dont chacune présente une aire correspondant sensiblement à celle d'une première partie de plateau destinée à être disposée directement sur la plaque chauffante et recevant un plat cuisiné devant être remis en température.

Selon d'autres caractéristiques de ce chariot:
- chaque plaque chauffante est sur sa périphérie et sur sa face tournée vers le bas pourvue d'un élément d'isolation thermique;
- les moyens de réfrigération comportent branchés en série dans un circuit d'alimentation, un premier évaporateur associé à au moins un ventilateur et un deuxième évaporateur intégré dans un réservoir rempli d'un liquide eutectique;
- les moyens de chauffage ou remise en température sont commandés par un moyen de détection de présence sur une plaque chauffante d'une première partie de plateau recevant un plat cuisiné destiné à être remis en température;
- ledit moyen de détection est un capteur électromécanique équivalent à un interrupteur à ressort fermé par l'appui d'une conformation de plateau sur l'interrupteur.

L'invention a également pour objet un plateau de réception de plats cuisinés à l'avance, comportant une première et une deuxième parties solidaires l'une de l'autre, ladite première partie constituant un bon caloporteur et étant agencée pour constituer une zone de plateau à chauffer apte à être disposée directement sur une plaque chauffante de manière à assurer le transfert thermique de la plaque chauffante à travers cette zone vers un plat préalablement disposé dans cette zone en vue d'un réchauffage, ladite deuxième partie constituant un mauvais caloporteur et étant apte à porter des plats cuisinés réfrigérés ne nécessitant pas une remise en température, caractérisé en ce que la première partie constituant un bon caloporteur comporte des éléments présentant une excellente conductibilité thermique et qui sont noyés dans la matière de la deuxième partie de plateau, cette matière formant une couche de faible épaisseur sur les faces inférieure et supérieure de la première partie de plateau.

Selon d'autres caractéristiques de ce plateau:
lesdits éléments noyés dans la matière de la deuxième partie de plateau sont constitués par des particules métalliques;
- lesdits éléments noyés dans la matière de la deuxième partie de plateau sont constitués par des pastilles métalliques rondes;
- lesdits éléments noyés dans la matière de la deuxième partie de plateau sont constitués par des bandes métalliques s'étendant de manière à former un treillis.

L'invention a également pour objet un plateau de réception de plats cuisinés à l'avance, comportant une première et une deuxième parties solidaires l'une de l'autre, ladite première partie constituant un bon caloporteur et étant agencée pour constituer une zone de plateau à chauffer apte à être disposée directement sur une plaque chauffante de manière à assurer le transfert thermique de la plaque chauffante à travers cette zone vers un plat préalablement disposé dans cette zone en vue d'un réchauffage, ladite deuxième partie constituant un mauvais caloporteur et étant apte à porter des plats cuisinés réfrigérés ne nécessitant pas une remise en température, caractérisé en ce qu'il comporte des moyens d'isolation thermique entre ladite deuxième partie et ladite première partie.

Selon d'autres caractéristiques de ce plateau:
- lesdits moyens d'isolation thermique entre ladite deuxième partie et ladite première partie sont constitués par des espaces d'air correspondant à des rainures de séparation réduisant au minimum le pont thermique entre les première et deuxième parties;
- lesdits moyens d'isolation thermique entre ladite deuxième partie et ladite première partie sont constitués par un cadre périphérique en une matière thermiquement isolante;
- la deuxième partie de plateau ainsi que les zones de rebord du plateau sont en une matière plastique renforcée ou non de fibres de verre ;
- la première partie de plateau est associée à un élément en forme de cloche de manière à délimiter avec celui-ci une cavité fermée de remise en température, caractérisé en ce que l'élément en forme de cloche est à double paroi constituée d'une paroi externe et d'une paroi interne espacées l'une de l'autre de manière à définir entre elles un interstice isolant ;
- l'interstice entre les parois externe et interne de l'élément en forme de cloche est rempli d'un isolant ;
- le plateau est sur sa face supérieure pourvu de moyens de positionnement de l'élément en forme de cloche sur la première partie de plateau ;
- le plateau est sur sa face inférieure pourvu d'au moins un élément formant saillie au-delà du plan dans lequel se trouve la face inférieure de la première partie de plateau, de manière à soulever au moins la plus grande partie de cette surface hors du contact direct avec un support sur lequel le plateau est disposé lors de sa distribution à un consommateur.

L'invention sera maintenant décrite plus en détail à l'aide d'un exemple non limitatif en référence aux dessins annexés sur lesquels:
- La figure 1 est une vue schématique en perspective d'un chariot suivant l'invention;
- La figure 2 est une coupe schématique vue de dessus d'un chariot suivant l'invention montrant, entre autres, les deux positions d'un plateau suivant l'invention;
- La figure 3 est une vue en perspective montrant un mode de réalisation du plateau suivant l'invention;
- la figure 4 est une vue en coupe d'un plateau suivant un autre mode de réalisation de l'invention;
- la figure 5 est une vue en coupe d'un plateau suivant encore un autre mode de réalisation de l'invention;
- la figure 6 est une vue en coupe partielle montrant un plateau suivant la figure 4 complété par un élément en forme de cloche suivant l'invention.

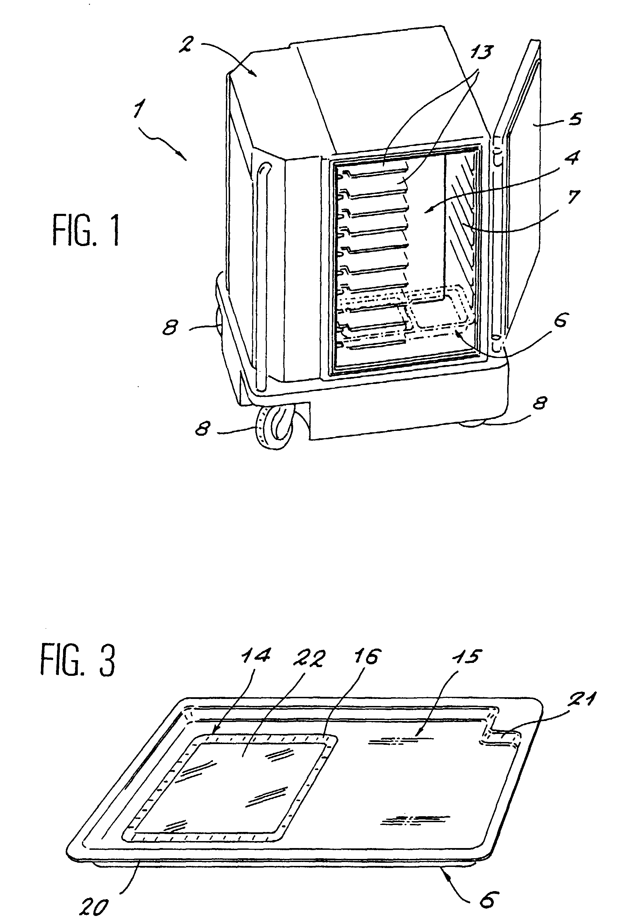

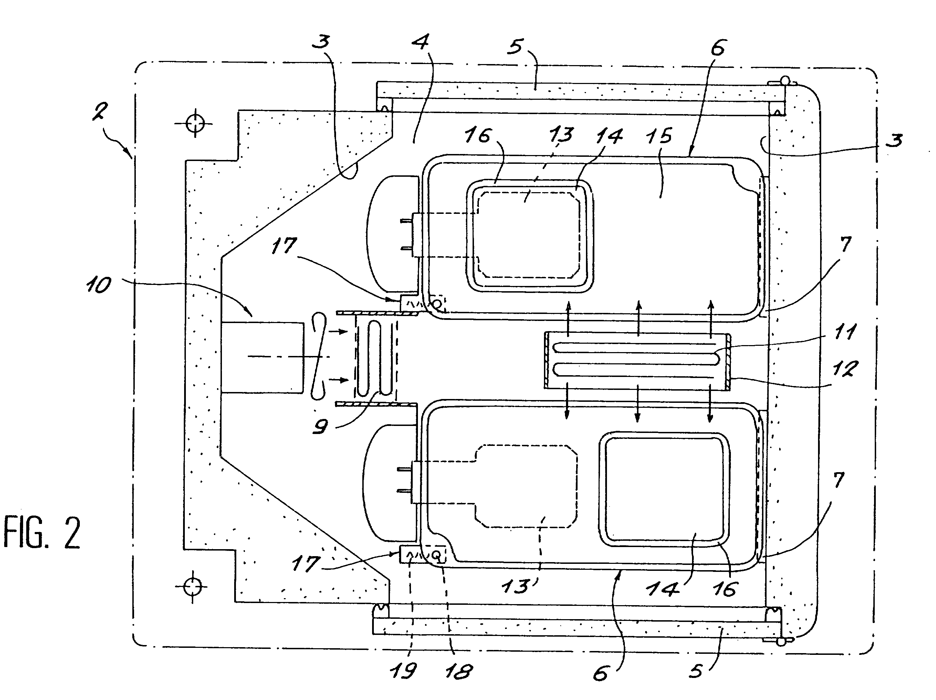

Les figures 1 et 2 montrent un exemple d'un chariot 1 suivant l'invention.

Les chariots de ce type utilisés pour la réfrigération, l'entreposage, le transport, et finalement la remise en température de certains plats avant la distribution de ceux-ci, comportent un boîtier 2 dont les parois internes 3 définissent une enceinte 4 pouvant être fermée et ouverte à l'aide d'une porte 5 montée pivotante sur le boîtier 2.

Plusieurs plateaux 6 recevant les plats sont disposés horizontalement à l'intérieur de l'enceinte 4 sur des structures comprenant des nervures latérales de guidage et de support 7.

Dans l'exemple illustré à la figure 2, cet agencement à l'intérieur de l'enceinte 4 est doublé et le boîtier 2 comporte ainsi deux portes 5 disposées latéralement de manière à permettre l'accès à deux rangées de plateaux 6 disposés de part et d'autre de l'axe longitudinal du chariot 1.

Tout l'ensemble est monté facilement déplaçable sur des roulettes 8.

Des moyens de réfrigération sont disposés à l'intérieur de l'enceinte 4. Ces moyens sont constitués par un premier évaporateur 9 associé à un ventilateur 10 et par un deuxième évaporateur 11 intégré dans un réservoir 12 rempli d'un liquide eutectique. Les deux évaporateurs 9 et 11 peuvent être branchés en série dans un circuit électrique et/ou frigorifique d'alimentation, le circuit électrique étant destiné à être branché au réseau.

Le premier évaporateur 9 constitue des moyens de réfrigération permettant une descente en température rapide lors du refroidissement de l'enceinte 4 dans une unité de production ou une cuisine centrale avant de recevoir les plats, mais il peut aussi être utilisé pour refroidir et maintenir ceux-ci à une température de l'ordre de +3°C.

Le deuxième évaporateur 11 contribue aussi au refroidissement de l'enceinte 4, mais il est essentiellement destiné à réfrigérer simultanément le liquide se trouvant dans le réservoir eutectique 12 qui constitue des moyens d'accumulation de froid lesquels sont destinés à être utilisés lors du transport et de la distribution aux consommateurs, le chariot 1 se trouvant pendant ce temps déconnecté du réseau, ce qui sera décrit plus en détail par la suite.

Chaque plateau 6 repose d'un côté sur une nervure latérale de guidage et de support 7 et du côté opposé sur une plaque chauffante 13.

Les plaques chauffantes 13 sont disposées de manière à former un empilement d'un seul côté de l'enceinte 4. Elles sont destinées à être branchées au réseau électrique afin de réchauffer les plats devant être remis en température et qui se trouvent dans la zone de plateau 14 reposant directement sur la plaque correspondante 13, comme cela est illustré à la partie supérieure de la figure 2.

Chaque plateau 6 est composé d'une première partie de plateau 14 définissant une zone destinée à recevoir un plat à remettre en température, et d'une deuxième partie de plateau 15 apte à supporter les plats qui ne doivent pas être remis en température. Chaque plaque chauffante 13 a une aire correspondant sensiblement à celle de la première partie de plateau 14.

La première partie de plateau à chauffer 14 est, afin de transmettre au mieux la chaleur au plat à remettre en température, en un matériau bon conducteur thermique de manière à constituer un bon caloporteur, et elle peut être thermiquement isolée de la deuxième partie de plateau 15 supportant les plats ne devant pas être réchauffés, pour ne pas diffuser une grande quantité de chaleur à cette deuxième partie de plateau.

La deuxième partie de plateau 15 qui est un mauvais caloporteur peut par exemple être fabriquée en polyester, de préférence renforcé de fibres de verre, mais également en polysulfone (PSU), en polysulfure de phénylène (PPS) ou en polyphénylène oxyde (PPO). Les zones de rebord du plateau sont avantageusement dans la même matière.

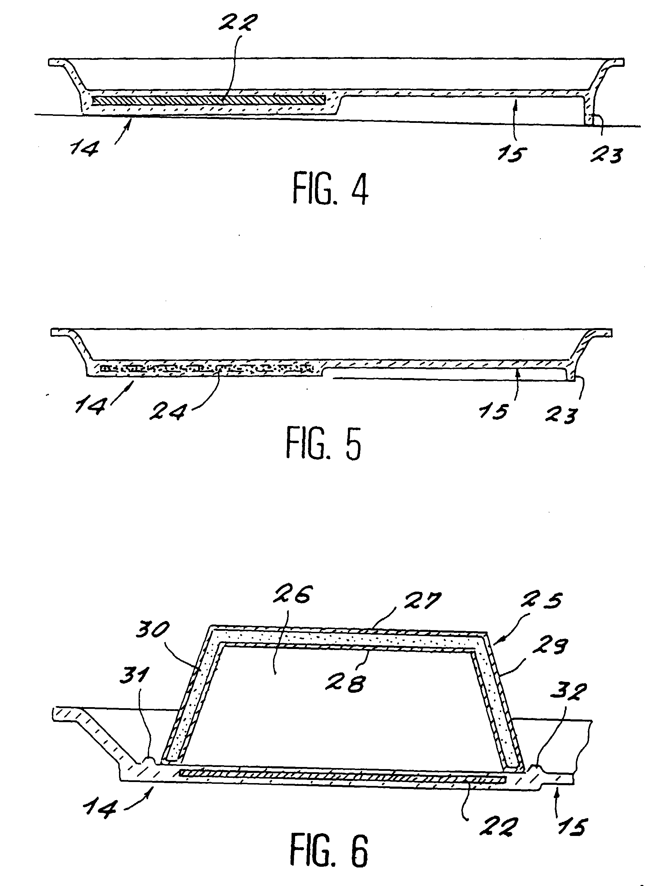

Un mode de réalisation du plateau 6 selon l'invention est illustré à la figure 3. La première partie de plateau à chauffer 14 est disposée dans un cadre 16 en un matériau thermiquement isolant et résistant à la chaleur. Cette première partie de plateau 14 est essentiellement constituée d'une plaque 22 présentant une excellente conductibilité thermique et peut par exemple être réalisée en métal.

Selon un autre mode de réalisation du plateau 6 non illustré sur les figures, la deuxième partie de plateau mauvais caloporteur 15 est thermiquement isolée de la première partie 14 par des rainures de séparation définissant des espaces d'air qui réduisent au minimum le pont thermique entre les première et deuxième parties 14, 15 du plateau 6. Dans ce cas, il est même possible de fabriquer le plateau en une seule pièce métallique puisque seule la première partie 14 sera chauffée par la plaque chauffante.

La figure 4 illustre un autre mode de réalisation du plateau suivant l'invention dans lequel la première partie de plateau 14 comporte une plaque 22 présentant une excellente conductibilité thermique, cette plaque étant noyée dans une couche d'une faible épaisseur de la matière dont est constitué la deuxième partie de plateau 15. On obtient ainsi un plateau avec un aspect de surface homogène même si l'épaisseur de la première partie de plateau 14 peut être supérieure à celle de la deuxième.

La plaque 22 peut être entièrement ou partiellement noyée dans la matière de la deuxième partie de plateau 15. La partie inférieure de la plaque peut ainsi être dépourvue de couche de cette matière pour venir en contact direct avec la plaque chauffante.

Dans ce dernier cas, la plaque 22 peut avantageusement être pourvu de trous sur son pourtour ou uniformément répartis sur toute sa surface pour assurer la prise dans la matière de la deuxième partie de plateau 15.

La matière de la deuxième partie de plateau 15 peut être une matière plastique telle que: polyester chargé ou non de fibres de verre, polypropylène, polysulfure de phénylène, polyphénylène oxyde, polysulfones.

Le plateau peut être obtenu par des techniques de compression ou de moulage par injection s'il s'agit d'un plateau en une matière plastique.

On peut également envisager un plateau plein entièrement en métal avec une première partie bon caloporteur dont les performances peuvent être améliorées grâce à un traitement de surface comme une oxydation anodique aboutissant à une surface noire permettant ainsi d'exploiter les propriétés de rayonnement. Dans ce cas, la deuxième partie constitue un mauvais caloporteur par rapport au plat qui se trouve sur la deuxième partie de plateau 15 grâce à une conformation empêchant un contact important entre le métal et les plats non remis en température, par exemple à l'aide d'une surface gaufrée.

Le plateau métallique peut être fabriqué en par exemple aluminium ou acier inoxydable.

La figure 5 illustre encore un autre mode de réalisation du plateau dans lequel la première partie de plateau 14 constituant un bon conducteur thermique comporte des particules 24, par exemple sous forme de paillettes, présentant une excellente conductibilité thermique et qui sont noyées dans la matière de la deuxième partie de plateau. Cette matière forme une couche de faible épaisseur sur les faces inférieure et/ou supérieure de la première partie de plateau 14.

Les particules 24 peuvent être des particules métalliques qui forment une couche intermédiaire plus ou moins bien définie dans la matière du plateau.

Au lieu des particules métalliques peuvent être utilisés des morceaux de métal noyés pouvant prendre diverses formes: pastilles rondes, bandes carrées ou rectangulaires formant un treillis métallique.

La figure 6 montre en plus grande échelle la première partie de plateau 14 illustrée sur la figure 4. Pour éviter que la chaleur qui traverse le plateau et qui n'est pas absorbée par le plat ne rayonne et ne vienne perturber l'ambiance dans l'enceinte unique du chariot, le plateau est de préférence complété par un élément en forme de cloche 25 qui avec la surface supérieure de la première partie de plateau 14 délimite une cavité fermée de remise en température 26.

Cette cloche 25 est dans l'exemple illustré sur la figure 6 formée par une double paroi même si elle peut naturellement aussi être à simple paroi en isolant seul ou par exemple en une matière plastique suffisamment épaisse.

La double paroi dans l'exemple illustré est constituée d'une paroi externe 27 dans l'ambiance froide de l'enceinte du chariot et d'une paroi interne 28 en contact avec la première partie chauffée du plateau créant ainsi un équilibre thermique empêchant la condensation. Les parois externe 27 et interne 28 sont espacées l'une de l'autre de manière à former un interstice isolant 29 entre les deux.

Afin d'améliorer davantage l'isolation entre l'enceinte froide 4 et la cavité de remise en température 26, l'interstice 29 est avantageusement rempli d'un isolant 30 à faible poids volumique, par exemple constitué d'une mousse polyuréthane.

La cloche peut tout comme la plus grande partie du plateau être réalisée en par exemple polyester, polycarbonate, polypropylène (PP), ou encore en ABS. La paroi interne peut éventuellement être fabriquée en acier inoxydalole.

La cloche peut être obtenue, en ce qui concerne la ou les parties en matière plastique, par soufflage, thermoformage ou moulage par injection.

Les cloches sont avantageusement conçues de telle manière que lorsqu'elles sont stockées en pile, l'air puisse circuler librement entre deux cloches voisines, assurant ainsi un bon séchage. Cela peut être obtenue grâce à des nervures disposées à l'intérieur de chaque cloche et qui viennent en appui contre la face externe de la cloche en dessous de manière à créer un espace libre entre les deux cloches.

Grâce à cette cloche on obtient une conservation améliorée de l'humidité des aliments, ce qui conserve leurs propriétés organoleptiques en empêchant le dessèchement, tout en évitant la condensation à l'intérieur de l'enceinte.

Cette cloche 25 peut naturellement être combinée avec n'importe lequel des modes de réalisation du plateau précédemment décrits.

Afin de faciliter le positionnement de la cloche 25 sur la première partie de plateau 14, la zone de celle-ci comporte avantageusement des moyens de positionnement qui dans l'exemple illustré sont constitués par au moins deux nervures 31, 32 disposées de part et d'autre de la première partie de plateau 14. Ces moyens de positionnement peuvent naturellement aussi être constitués par des rainures non représentées qui suivent le contour du rebord de la cloche 25.

Le positionnement de la cloche sur le plateau ne pourra par ailleurs se faire que sur la première partie de plateau 14, grâce à par exemple des encochages associés à des doigts de positionnement disposés sur la cloche et sur le plateau et qui ainsi forment un dispositif détrompeur.

La cloche 25 est pour en faciliter la manutention pourvue d'une poignée non représentée formée directement dans la surface supérieure de la cloche.

Ainsi, l'utilisation d'une cloche suivant l'invention résout plusieurs problèmes de nature différente associés à l'hygiène, la performance de remise en température, la non-déperdition de chaleur dans l'enceinte froide, la condensation à l'intérieur de l'enceinte, et elle contribue également à conserver la qualité des aliments.

Afin d'éviter le contact direct entre au moins la plus grande partie de la première partie de plateau 14 toujours chaude lors de sa distribution à un consommateur, le plateau est avantageusement pourvue d'un élément 23 formant saillie au-delà du plan dans lequel se trouve la face inférieure de la première partie de plateau 14. Dans l'exemple illustré sur la figure 4, cet élément 23 formant saillie est constitué d'une nervure s'étendant parallèlement au rebord d'extrémité du plateau du côté de la deuxième partie de plateau 15.

Il est naturellement possible de prévoir plusieurs éléments ponctuels sous forme d'ergots faisant saillie de la même façon que la nervure 23 et qui sont au nombre de deux disposés dans les régions d'angle de ce même côté du plateau. Une autre variante pour éviter l'inclinaison même légère du plateau lorsqu'il est posé sur un support consiste a prévoir également de tels ergots du côté de la première partie de plateau 14.

Chaque plaque chauffante 13 du chariot 1 est avantageusement commandée individuellement par des moyens de détection de présence sur la plaque d'une première partie de plateau 14 recevant un plat cuisiné destiné à être remis en température.

Ces moyens de détection de présence comprennent dans l'exemple illustré à la figure 2 un capteur électromécanique tel qu'un interrupteur à ressort 17. Cet interrupteur comporte une bille 18 sollicitée vers l'extérieur par un ressort 19. Il peut également s'agir d'un système de détection magnétique, composé d'un aimant et d'un interrupteur à lame souple.

L'interrupteur se ferme pour permettre l'alimentation en courant électrique de la plaque 13 lorsqu'une conformation sous forme d'un bord d'angle 20 du plateau 6 vient en appui contre une bille 18 de manière à solliciter celle-ci vers l'intérieur contre l'action du ressort 19, ce qui a pour résultat que la bille relie l'un à l'autre deux contacts à lame (non illustrés sur les figures) de l'interrupteur, lesquels ferment ainsi le circuit.

L'interrupteur s'ouvre et coupe le courant d'alimentation de la plaque 13 lorsqu'on retire le plateau 6 et que par conséquent la bille 18 n'est plus sollicitée vers l'intérieur.

Afin de prévoir des cas où l'on souhaite ne pas remettre en température tous les plats se trouvant dans la première partie des plats, par exemple si tous les repas individuellement préparés ou certains d'entre eux doivent être servis entièrement froids, le bord d'angle de plateau 21 opposé au bord d'angle 20 d'actionnement de l'interrupteur peut avantageusement être conçu de telle manière qu'il est dirigé vers l'intérieur de sorte qu'il ne vient pas en contact avec la bille de l'interrupteur lorsque la plaque est tournée dans l'autre sens avant d'être introduite dans l'enceinte 4. Par conséquent, l'interrupteur reste dans la position dans laquelle il coupe le courant lorsque la première partie de plateau 14 se trouve sur la plaque chauffante 13.

Il est par ailleurs évident que dans le mode de réalisation décrit en référence à la figure 6, par la notion de conformation de plateau on comprend également une conformation disposée sur la cloche 25 et la détection porte ainsi dans ce cas sur la présence de la cloche et indirectement sur la présence d'un plat devant être réchauffé.

Selon une variante, les moyens de détection comportent un aimant disposé sur la cloche ou sur le plateau, cet aimant agissant sur un interrupteur à lame souple se trouvant derrière la paroi de l'enceinte et assurant la fermeture du circuit électrique lorsque l'aimant se trouve à proximité.

Le système de détection peut dans sa forme la plus simple consister en une détection manuelle niveau par niveau.

Pour ne pas perturber la température ambiante de l'enceinte 4 lors de la remise en températures des plats disposés sur la première partie de plateau 14 lorsque celle-ci se trouve sur la plaque chauffante 13, cette dernière est avantageusement sur ses surfaces inférieure et périphérique pourvue d'un dispositif d'isolation thermique vers le bas et vers les côtés. Grâce à cet agencement, il est possible d'avoir dans l'enceinte 4 aussi bien des plateaux 6 avec des plats devant être remis en température que des plateaux avec exclusivement des plats devant être servis frais, sans remise en température préalable.

Un tel agencement est aussi important lorsqu'on utilise le mode de réalisation du plateau pourvu d'une cloche puisque la distance entre la surface supérieure de la cloche et la plaque chauffante sera relativement limitée.

Cet agencement est également important lorsque des plateaux comportant exclusivement des plats devant être servis froids sont mélangés avec des plateaux comportant des plats devant être remis en température. Dans ce cas, il peut arriver qu'un plat non remis en température se trouve en dessous d'une plaque chauffante qui ainsi doit être bien isolée sur sa périphérie et sur sa face inférieure.

Le chariot suivant l'invention fonctionne de la manière suivante.

Le chariot 1 est d'abord, dans une unité de production ou cuisine centrale, connecté au réseau électrique qui est ainsi relié aux premier manière et second évaporateurs 9, 11 lesquels sont mis en fonctionnement pour réfrigérer l'enceinte 4, le premier évaporateur 9 étant ventilé et le deuxième 11 servant avant tout à réfrigérer le liquide se trouvant dans le réservoir 12 qui constitue un dispositif d'accumulation de froid.

Ensuite, l'enceinte 4 reçoit des plateaux 6 sur lesquels sont placés des plats cuisinés à l'avance et réfrigérés.

Chaque plateau 6 comporte un repas complet individuel qui peut être composé d'un plat devant être remis en température ultérieurement ainsi que de plats, par exemple hors-d'oeuvre et dessert, qui ne doivent pas être remis en température avant d'être distribués aux consommateurs.

Le plateau 6 est placé dans l'enceinte 4 de sorte que la première partie de plateau 14 supportant un plat à remettre en température soit disposée sur une plaque chauffante 13 et que le bord 20 du plateau 6 actionne déjà l'interrupteur 17 qui ferme à cet endroit le circuit d'alimentation de la plaque correspondante en vue de la connexion ultérieure au réseau pour la remise en température des plats se trouvant sur la première partie 14 du plateau 6 correspondant.

Suite au chargement de tous les plateaux 6 dans l'enceinte 4 , les évaporateurs peuvent continuer à fonctionner jusqu'à ce que la température souhaitée de stockage intermédiaire et/ou de transport de l'ordre de +30° ait été atteinte.

Il est possible de laisser le chariot 1 branché au réseau si l'on souhaite stocker les repas tous préparés pendant un certain temps. Dans le cas contraire, le chariot est débranché du réseau électrique pour être transporté vers le lieu de consommation.

Pendant le transport, tous les plats sont maintenus réfrigérés à l'aide du réservoir eutectique 12.

Arrivé au lieu de consommation et avant de distribuer les plateaux 6 aux consommateurs, le chariot 1 est de nouveau branché au réseau électrique qui cette fois sera relié au circuit d'alimentation des plaques chauffantes lorsque l'opérateur voudra engager la remise en température.

Les plaques chauffantes dont les interrupteurs sont préalablement actionnés par les bords de plateau sont ainsi mises en marche pour remettre en température le plat se trouvant sur la première partie 14 de plateau qui repose sur la plaque. La chaleur est ainsi transférée de la plaque au plat par l'intermédiaire de la première partie 14 de plateau qui est un bon conducteur thermique.

La chaleur transférée par la première partie de plateau 14 est dans le plan du plateau 6 pratiquement limitée à cette première partie grâce au fait que celle-ci est entourée par un cadre 16 isolant de la chaleur ou par des fentes qui forment des espaces isolants entre les première et la deuxième parties 14, 15 de plateau. Dans les modes de réalisation du plateau illustrés sur les figures 4 et 5, le transfert de chaleur sera également pratiquement limitée à la première partie de plateau 14.

Lors de cette remise en température des plats se trouvant sur la première partie de plateau 14, les autres plats qui ne doivent pas être remis en température sont maintenus au frais grâce aux moyens de réfrigération 9, 10, 11 et 12. Cette procédure de remise en température peut être accélérée grâce à l'utilisation d'une cloche 25 telle qu'illustrée sur la figure 6, cette cloche apportant en outre d'autres avantages mentionnés ci-dessus.

Suite à la remise en température des plats qui se trouvent sur la première partie de plateau 14, le chariot 1 est débranché du réseau électrique et déplacé vers le lieu de distribution aux consommateurs. Etant donné que les plateaux 6 restent sur manière les plaques jusqu'à ce qu'ils soient sortis de l'enceinte 4, les plats remis en température gardent relativement longtemps la chaleur, alors que les autres plats sont toujours gardés au frais, grâce au réservoir eutectique 12.

Sont ainsi obtenues des performances avantageuses grâce à l'invention et plus precisément:
- accumulation de chaleur par les plaques, cette chaleur étant restituée à des aliments préalablement choisis parmi d'autres sur le plateau commun pour les maintenir en température lorsque le chariot est débranché, par exemple pendant ses déplacements entre office et consommateur,
- accumulation de froid par le réservoir eutectique, ce froid étant restitué à des aliments préalablement choisis parmi d'autres sur le plateau commun pour les maintenir en température lorsque le chariot est débranché, par exemple pendant ses déplacements entre la cuisine ou l'office et le consommateur.

Le plateau suivant l'invention est d'autant plus remarquable en ce qu'il constitue un plateau non dissocié avec une première partie bon caloporteur et solidaire d'une deuxième partie mauvais caloporteur, la première partie pouvant être disposée directement sur n'importe quelle plaque chauffante.

Un autre avantage procuré par le plateau suivant invention réside dans le fait que ce plateau peut recevoir de nombreuses vaisselles standard, évitant ainsi au client d'être attaché au monopole d'un fournisseur.

Ainsi sont obtenus un procédé, un chariot et un plateau permettant le refroidissement, le stockage, le transport, la remise en température et la distribution à partir d'une enceinte unique de plateaux individuellement préparés et comportant initialement aussi bien des plats devant être remis en température que des plats qui ne doivent pas l'être.

## Revendications

1. Procédé de remise en température de plats cuisinés à l'avance chargés dans une enceinte unique réfrigérée (4) d'un chariot de transport (1) en vue de leur transport vers un lieu de consommation, procédé dans lequel on remet en température certains desdits plats cuisinés réfrigérés, en vue de leur consommation, et dans lequel lesdits certains plats cuisinés réfrigérés devant être remis en température sont, avant d'être chargés dans l'enceinte (4), disposés avec les plats ne nécessitant pas une remise en température, sur un même plateau commun (6) à tous les plats constituant un repas individuel, chaque plateau étant, avant d'être disposé dans l'enceinte unique, pourvu d'un élément en forme de cloche (25) disposée sur une première partie de plateau (14) recevant un plat cuisiné destiné à être remis en température, de manière à délimiter avec ladite première partie de plateau (14) une cavité fermée (26) de remise en température, ladite enceinte (4) unique étant pendant la remise en température desdits certains plats cuisinés réfrigérés continuellement réfrigérée pour maintenir une température de réfrigération convenable des plats cuisinés non remis en température, caractérisé en ce qu'on utilise pour la remise en température un empilage de plaques chauffantes (13) disposées à l'intérieur de ladite enceinte unique (4) dudit chariot de transport réfrigéré, en ce que chaque première partie de plateau (14) est agencée pour constituer une zone thermiquement conductrice, en ce qu'on dispose la première partie de plateau directement sur la plaque chauffante correspondante qui présente une aire correspondant sensiblement à celle de la première partie de plateau (14), et en ce qu'on effectue la remise en température par transfert thermique à travers ladite première partie de plateau.

2. Procédé suivant la revendication 1, caractérisé en ce que l'on isole thermiquement chaque plaque chauffante (13) vers le bas est vers les côtés.

3. Chariot de transport réfrigéré de plats cuisinés à l'avance, du type comportant des moyens de réfrigération ou d'accumulation de froid (9, 10, 11, 12) et des moyens de chauffage ou de remise et de maintien en température (13), l'ensemble desdits moyens (9 à 13) étant contenu dans une même enceinte unique (4), caractérisé en ce que ledit chariot comporte d'un seul côté de l'enceinte un empilage de plaques chauffantes (13) dont chacune présente une aire correspondant sensiblement à celle d'une première partie de plateau (14) destinée à être disposée directement sur la plaque chauffante et recevant un plat cuisiné devant être remis en température.

4. Chariot de transport réfrigéré selon la revendication 3, caractérisé en ce que chaque plaque chauffante (13) est sur sa périphérie et sur sa face tournée vers le bas pourvue d'un élément d'isolation thermique.

5. Chariot de transport réfrigéré selon la revendication 3 ou 4, caractérisé en ce que les moyens de réfrigération (9, 10, 11) comportent branchés en série dans un circuit d'alimentation, un premier évaporateur (9) associé à au moins un ventilateur (10) et un deuxième évaporateur (11) intégré dans un réservoir (12) rempli d'un liquide eutectique.

6. Chariot de transport réfrigéré selon l'une quelconque des revendications 3 à 5, caractérisé en ce que les moyens de chauffage ou remise en température (13) sont commandés par un moyen de détection de présence (17, 18, 19) sur une plaque chauffante (13) d'une première partie de plateau (14) recevant un plat cuisiné destiné à être remis en température.

7. Chariot de transport réfrigéré selon la revendication 6, caractérisé en ce que ledit moyen de détection est un capteur électromécanique équivalent à un interrupteur à ressort (17, 18, 19) fermé par l'appui d'une conformation de plateau (20) sur l'interrupteur.

8. Plateau de réception de plats cuisinés à l'avance, comportant une première et une deuxième parties solidaires l'une de l'autre, ladite première partie (14) constituant un bon caloporteur et étant agencée pour constituer une zone de plateau à chauffer apte à être disposée directement sur une plaque chauffante (13) de manière à assurer le transfert thermique de la plaque chauffante à travers cette zone vers un plat préalablement disposé dans cette zone en vue d'un réchauffage, ladite deuxième partie (15) constituant un mauvais caloporteur et étant apte à porter des plats cuisinés réfrigérés ne nécessitant pas une remise en température, caractérisé en ce que la première partie (14) constituant un bon caloporteur comporte des éléments présentant une excellente conductibilité thermique et qui sont noyés dans la matière de la deuxième partie de plateau (15), cette matière formant une couche de faible épaisseur sur les faces inférieure et supérieure de la première partie de plateau (14).

9. Plateau suivant la revendication 8, caractérisé en ce que lesdits éléments noyés dans la matière de la deuxième partie de plateau sont constitués par des particules métalliques.

10. Plateau suivant la revendication 8, caractérisé en ce que les dits éléments noyés dans la matière de la deuxième partie de plateau sont constitués par des pastilles métalliques rondes.

11. Plateau suivant la revendication 8, caractérisé en ce que les dits éléments noyés dans la matière de la deuxième partie de plateau sont constitués par des bandes métalliques s'étendant de manière à former un treillis.

12. Plateau de réception de plats cuisinés à l'avance, comportant une première et une deuxième parties solidaires l'une de l'autre, ladite première partie (14) constituant un bon caloporteur et étant agencée pour constituer une zone de plateau à chauffer apte à être disposée directement sur une plaque chauffante (13) de manière à assurer le transfert thermique de la plaque chauffante à travers cette zone vers un plat préalablement disposé dans cette zone en vue d'un réchauffage, ladite deuxième partie (15) constituant un mauvais caloporteur et étant apte à porter des plats cuisinés réfrigérés ne nécessitant pas une remise en température, caractérisé en ce qu'il comporte des moyens d'isolation thermique entre ladite deuxième partie (15) et ladite première partie.

13. Plateau selon la revendication 12, caractérisé en ce que lesdits moyens d'isolation thermique entre ladite deuxième partie (15) et ladite première partie (14) sont constitués par des espaces d'air correspondant à des rainures de séparation réduisant au minimum le pont thermique entre les première et deuxième parties.

14. Plateau selon la revendication 12, caractérisé en ce que lesdits moyens d'isolation thermique entre ladite deuxième partie (15) et ladite première partie (14) sont constitués par un cadre périphérique (16) en une matière thermiquement isolante.

15. Plateau suivant l'une quelconque des revendications 8 à 14, caractérisé en ce que la deuxième partie de plateau (15) ainsi que les zones de rebord du plateau sont en une matière plastique renforcée ou non de fibres de verre.

16. Plateau suivant l'une quelconque des revendications 8 à 15, dans lequel la première partie (14) de plateau est associée à un élément en forme de cloche (25) de manière à délimiter avec celui-ci une cavité fermée (26) de remise en température, caractérisé en ce que l'élément en forme de cloche est à double paroi constituée d'une paroi externe (27) et d'une paroi interne (28) espacées l'une de l'autre de manière à définir entre elles un interstice isolant (29).

17. Plateau suivant la revendication 16, caractérisé en ce que l'interstice (29) entre les parois externe et interne (27, 28) de l'élément en forme de cloche (25) est rempli d'un isolant (30).

18. Plateau suivant l'une quelconque des revendications 8 à 17, caractérisé en ce que le plateau est sur sa face supérieure pourvu de moyens de positionnement (31, 32) de l'élément en forme de cloche (25) sur la première partie de plateau (14).

19. Plateau suivant l'une quelconque des revendications 8 à 18, caractérisé en ce que le plateau est sur sa face inférieure pourvu d'au moins un élément formant saillie (23) au-delà du plan dans lequel se trouve la face inférieure de la première partie de plateau (14), de manière à soulever au moins la plus grande partie de cette surface hors du contact direct avec un support sur lequel le plateau est disposé lors de sa distribution à un consommateur.

## Patentansprüche

1. Verfahren zum Erwärmen von zuvor zubereiteten Fertiggerichten, die während ihres Transportes zu einer Stelle, an der sie verzehrt werden, in einem einzigen gemeinsamen gekühlten Raum (4) eines Transportwagens (1) untergebracht sind, wobei einige der gekühlten Fertiggerichte vor dem Verzehr erwärmt und diese gekühlten Fertiggerichte vor ihrer Erwärmung und vor ihrer Einbringung in den Raum (4) zusammen mit solchen Fertiggerichten, die keine Erwärmung benötigen, auf einem gemeinsamen Tablett (6) angeordnet werden, so daß alle Fertiggerichte eine individuelle Mahlzeit bilden, wobei jedes Tablett vor der Einbringung in den einzigen Raum mit einem Element in Form einer Haube (25), die in einem ersten Tablettbereich (14) angeordnet wird, der ein zu erwärmendes Fertiggericht aufnimmt, so versehen wird, daß sie mit diesem ersten Tablettbereich (14) einen geschlossenen Erwärmungsraum (26) begrenzt, wobei dieser einzige Raum (4) während der Erwärmung der einigen gekühlten Fertiggerichte kontinuierlich weitergekühlt wird, um eine für die nicht zu erwärmenden Fertiggerichte geeignete Kühltemperatur aufrechtzuerhalten, **dadurch gekennzeichnet,** daß für die Erwärmung ein Stapel Heizplatten (13) benutzt wird, der im Innern dieses einzigen Raumes (4) dieses gekühlten Transportwagens untergebracht ist, daß jeder erste Tablettbereich (14) zur Bereitstellung einer Zone mit guter Wärmeleitung ausgebildet ist, daß der erste Tablettbereich direkt auf einer entsprechenden Heizplatte angeordnet wird, die einen entsprechenden Flächenbereich wie derjenige an dem ersten Tablettbereich (14) bereitstellt, und daß die Erwärmung über Wärmetransport durch diesen ersten Tablettbereich hindurch herbeigeführt wird.

2. Verfahren nach Anspruch 1, **dadurch gekennzeichnet,** daß jede Heizplatte (13) nach unten und nach den Seiten thermisch isoliert wird.

3. Wagen für den gekühlten Transport von zuvor zubereiteten Fertiggerichten, der Kühlmittel oder Kühlhaltemittel (9, 10, 11, 12) und Heiz- oder Erwärmungsmittel (13) sowie Mittel zur Temperaturhaltung aufweist, wobei alle diese Mittel (9 bis 13) in einem einzigen gemeinsamen Raum (4) angeordnet sind, **dadurch gekennzeichnet,** daß der Wagen auf einer Seite des Raums einen Stapel Heizplatten (13) aufweist, von denen jede einen Flächenbereich bereitstellt, der im wesentlichen einem ersten Tablettbereich (14) entspricht, der zur Einbringung direkt auf der Heizplatte und zur Aufnahme eines zu erwärmenden Fertiggerichtes bestimmt ist.

4. Wagen für den gekühlten Transport nach Anspruch 3, **dadurch gekennzeichnet,** daß jede Heizplatte (13) auf ihrem Umfang und auf ihrer nach unten weisenden Oberfläche mit einem thermisch isolierenden Element versehen ist.

5. Wagen für den gekühlten Transport nach Anspruch 3 oder 4, **dadurch gekennzeichnet,** daß die Kühlmittel (9, 10, 11) in Reihe geschaltet an einem Versorgungskreis einen ersten Verdampfer (9) mit mindestens einem Ventilator (10) und einen zweiten Verdampfer (11), der integriert in einem mit einer eutektischen Flüssigkeit gefüllten Behälter (12) angeordnet ist, aufweisen.

6. Wagen für den gekühlten Transport nach einem der Ansprüche 3 bis 5, **dadurch gekennzeichnet,** daß die Heiz- oder Erwärmungsmittel (13) über ein Mittel (17, 18, 19) geschaltet sind, welches die Anwesenheit eines ersten, zur Aufnahme eines zu erwärmenden Fertiggerichtes bestimmten Tablettbereiches (14) auf einer Heizplatte (13) detektiert.

7. Wagen für den gekühlten Transport nach Anspruch 6, **dadurch gekennzeichnet,** daß das detektierende Mittel ein elektromechanischer Sensor ähnlich einem federbelasteten Unterbrecher (17, 18, 19) ist, der durch die Anlage der Gestalt des Tabletts (20) an dem Unterbrecher in die Schließstellung überführt wird.

8. Tablett zur Aufnahme zuvor zubereiteter Fertiggerichte, das einen ersten und einen zweiten Tablettbereich aufweist, die fest miteinander verbunden sind, wobei der erste Tablettbereich (14) einen guten Wärmeleiter bildet und zur Bereitstellung einer zu erwärmenden Zone des Tabletts ausgebildet ist, die zur Einstellung direkt oberhalb einer Heizplatte (13) in der Weise geeignet ist, daß der Wärmeübergang von der Heizplatte durch diese Zone in ein zuvor auf dieser Zone angeordnetes, zu erwärmendes Fertiggericht sichergestellt ist, während der zweite Tablettbereich (15) einen schlechten Wärmeleiter bildet und zur Aufnahme eines gekühlten, nicht zu erwärmenden Fertiggerichtes ausgebildet ist, **dadurch gekennzeichnet,** daß der erste einen guten Wärmeleiter bildende Tablettbereich (14) Elemente mit hervorragender Wärmeleitfähigkeit aufweist, die in dem Material des zweiten Tablettbereichs (15) untergebracht sind, wobei dieses Material in einer dünnen Schicht die untere und obere Oberfläche des ersten Tablettbereichs (14) des Tabletts überzieht.

9. Tablett nach Anspruch 8, **dadurch gekennzeichnet,** daß die in dem Material des zweiten Tablettbereichs untergebrachten Elemente aus metallischen Partikeln bestehen.

10. Tablett nach Anspruch 8, **dadurch gekennzeichnet,** daß die in dem Material des zweiten Tablettbereichs untergebrachten Elemente aus runden metallischen Pellets bestehen.

11. Tablett nach Anspruch 8, **dadurch gekennzeichnet,** daß die in dem Material des zweiten Tablettbereichs untergebrachten Elemente aus metallischen gitterförmigen Bändchen bestehen.

12. Tablett zur Aufnahme zuvor zubereiteter Fertiggerichte, das einen ersten und einen zweiten Tablettbereich aufweist, die fest miteinander verbunden sind, wobei der erste Tablettbereich (14) einen guten Wärmeleiter bildet und zur Bereitstellung einer zu erwärmenden Zone des Tabletts ausgebildet ist, die zur Einstellung direkt auf einer Heizplatte (13) in der Weise geeignet ist, daß der Wärmeübergang von der Heizplatte durch diese Zone in ein zuvor auf dieser Zone angeordnetes, zu erwärmendes Fertiggericht sichergestellt ist, während der zweite Tablettbereich (15) einen schlechten Wärmeleiter bildet und zur Aufnahme eines gekühlten, nicht zu erwärmenden Fertiggerichtes ausgebildet ist, **dadurch gekennzeichnet,** daß es zwischen dem zweiten (15) und dem ersten Tablettbereich thermisch isolierende Mittel aufweist.

13. Tablett nach Anspruch 12, **dadurch gekennzeichnet,** daß die thermisch isolierenden Mittel zwischen dem zweiten (15) und dem ersten (14) Tablettbereich von Luftspalten gebildet werden, die Trennnuten entsprechen, die die Wärmebrücke zwischen den ersten und den zweiten Tablettbereichen auf ein Minimum begrenzen.

14. Tablett nach Anspruch 12, **dadurch gekennzeichnet,** daß die thermisch isolierenden Mittel zwischen dem zweiten (15) und dem ersten (14) Tablettbereich von einem umlaufenden Rahmen (16) aus thermisch isolierendem Material gebildet werden.

15. Tablett nach einem der Ansprüche 8 bis 14, **dadurch gekennzeichnet,** daß der zweite Tablettbereich (15) wie auch die Randzonen des Tabletts aus Kunststoff besteht, der mit Glasfasern verstärkt ist oder nicht.

16. Tablett nach einem der Ansprüche 8 bis 15, wobei der erste Tablettbereich (14) mit einem Element in Form einer Haube (25) ausgestattet ist, die mit diesem einen geschlossenen Erwärmungsraum (26) begrenzt, **dadurch gekennzeichnet,** daß das Element in Form einer Haube (25) doppelwandig ausgebildet ist und eine Außenwand (27) und eine Innenwand (28) aufweist, die unter Bildung eines isolierenden Zwischenraums (29) beabstandet zueinander angeordnet sind.

17. Tablett nach Anspruch 16, **dadurch gekennzeichnet,** daß der Zwischenraum (29) zwischen der Außenwand (27) und der Innenwand (28) des Elementes in Form der Haube (25) mit einer Isolierung (30) gefüllt ist.

18. Tablett nach einem der Ansprüche 8 bis 17, **dadurch gekennzeichnet,** daß das Tablett auf seiner nach oben weisenden Oberfläche Positioniermittel (31, 32) für das Element in Form der Haube (25) auf dem ersten Tablettbereich (14) aufweist.

19. Tablett nach einem der Ansprüche 8 bis 18, **dadurch gekennzeichnet,** daß das Tablett auf seiner nach unten weisenden Oberfläche diesseits der Ebene, in der sich die untere Oberfläche des ersten Tablettbereiches (14) befindet, mit mindestens einem einen Vorsprung (23).bildenden Element in der Weise versehen ist, daß mindestens der größere Teil dieser Oberfläche weg von einem direkten Kontakt zu einem Tisch, auf dem das Tablett bei der Ausgabe an einen Verbraucher abgestellt wird, angehoben ist.

## Claims

1. Method for reheating precooked meals loaded into a single refrigerated enclosure (4) of a trolley (1) for the transportation thereof to a place of consumption, in which process some of said refrigerated cooked dishes are reheated for the consumption thereof and in which process these certain refrigerated cooked dishes to be reheated are arranged, before being loaded into the enclosure (4), with dishes which do not have to be reheated, on the same tray (6) common to all the dishes constituting an individual meal, each tray being provided, before being arranged in the single enclosure, with a bell-shaped element (25) arranged on a first portion of the tray (14) receiving a cooked dish intended to be reheated, so as to delimit with said first tray portion (14) a closed reheating cavity (26), said single enclosure (4) being refrigerated continuously during the reheating of said certain refrigerated cooked dishes in order to maintain a suitable refrigeration temperature of the non-reheated cooked dishes, characterised in that a stack of heating plates (13) arranged in the interior of said single enclosure (4) of said refrigerated trolley is used for reheating, in that each first tray portion (14) is disposed so as to constitute a heat-conducting zone, in that the first tray portion is arranged directly on the corresponding heating plate which has an area substantially corresponding to that of the first tray portion (14), and in that reheating is carried out by the transfer of heat through said first tray portion.

2. Process according to claim 1, characterised in that each heating plate (13) is thermally insulated downwards and toward the sides.

3. Refrigerated transport trolley for precooked dishes of the type comprising refrigerating or cold-accumulating means (9, 10, 11, 12) and heating or reheating and heat-retaining means (13), all said means (9 to 13) being contained in the same single enclosure (4), characterised in that said trolley comprises, on a single side of the enclosure, a stack of heating plates (13) of which each one has an area substantially corresponding to that of a first tray portion (14) intended to be arranged directly on the heating plate and receiving a cooked dish which is to be reheated.

4. Refrigerated transport trolley according to claim 3, characterised in that each heating plate (13) is provided with a heat insulating element at its periphery and on its down-turned face.

5. Refrigerated transport trolley according to claim 3 or 4, characterised in that the refrigerating means (9, 10, 11) comprise, connected in series in a supply circuit, a first evaporator (9) associated with at least one fan (10) and a second evaporator (11) integrated in a reservoir (12) filled with a eutectic liquid.

6. Refrigerated transport trolley according to any one of claims 3 to 5, characterised in that the heating or reheating means (13) are controlled by a means (17, 18, 19) for detecting the presence, on a heating plate (13), of a first tray portion (14) receiving a cooked dish intended to be reheated.

7. Refrigerated transport trolley according to claim 6, characterised in that said detecting means is an electromagnetic sensor equivalent to a spring switch (17, 18, 19) closed by the bearing of a tray configuration (20) on the switch.

8. Tray for receiving precooked dishes, comprising a first portion and a second portion which are integral with one another, said first portion (14) being a good heat transfer medium and being disposed so as to constitute a zone of tray to be heated capable of being arranged directly on a heating plate (13) so as to allow the transfer of heat from the heating plate through this zone toward a dish previously arranged in this zone for reheating, said second portion (15) constituting a poor heat transfer medium and being capable of carrying refrigerated cooked dishes not requiring reheating, characterised in that the first portion (14) constituting a good heat transfer medium comprises elements which have excellent thermal conductivity and are immersed in the material of the second tray portion (15), this material forming a thin layer on the lower and upper faces of the first tray portion (14).

9. Tray according to claim 8, characterised in that said elements immersed in the material of the second tray portion consist of metal particles.

10. Tray according to claim 8, characterised in that said elements immersed in the material of the second tray portion consist of round metallic pellets.

11. Tray according to claim 8, characterised in that said elements immersed in the material of the second tray portion consist of metal strips extending so as to form a trellis.

12. Tray for receiving precooked dishes, comprising a first portion and a second portion which are integral with one another, said first portion (14) being a good heat transfer medium and being disposed so as to constitute a zone of tray to be heated capable of being arranged directly on a heating plate (13) so as to allow the transfer of heat from the heating plate through this zone toward a dish previously arranged in this zone for reheating, said second portion (15) constituting a poor heat transfer medium and being capable of carrying refrigerated cooked dishes not requiring reheating, characterised in that it comprises heat insulators between said second portion (15) and said first portion.

13. Tray according to claim 12, characterised in that said heat insulators between said second portion (15) and said first portion (14) consist of air spaces corresponding to separating grooves which minimise the thermal bridge between the first and second portions.

14. Tray according to claim 12, characterised in that said heat insulators between said second portion (15) and said first portion (14) consist of a peripheral frame (16) made of a heat insulating material.

15. Tray according to any one of claims 8 to 14, characterised in that the second tray portion (15) as well as the edge zones of the tray are made of a plastics material which may or may not be reinforced with glass fibres.

16. Tray according to any one of claims 8 to 15, in which the first tray portion (14) is associated with a bell-shaped element (25) so as to delimit therewith a closed reheating cavity (26), characterised in that the bell-shaped element comprises a double wall consisting of an external wall (27) and an internal wall (28) spaced from one another so as to define an insulating gap (29) in-between.

17. Tray according to claim 16, characterised in that the gap (29) between the external and internal walls (27, 28) of the bell-shaped element (25) is filled with an insulator (30).

18. Tray according to any one of claims 8 to 17, characterised in that the tray is provided, on its upper face, with means (31, 32) for positioning the bell-shaped element (25) on the first tray portion (14).

19. Tray according to any one of claims 8 to 18, characterised in that the tray is provided, on its lower face, with at least one element forming a projection (23) beyond the plane in which the lower face of the first tray portion (14) is located, so as to raise at least the majority of this surface out of direct contact with a support on which the tray is arranged when it is being distributed to a consumer.
